(19) Europäisches Patentamt
European Patent Office
Office européen des brevets

(11) Publication number: **0 371 782 A2**

(12) **EUROPEAN PATENT APPLICATION**

(21) Application number: **89312418.0**

(22) Date of filing: **29.11.89**

(51) Int. Cl.5: **C09B 69/10, C09B 1/58, G03G 9/09**

(30) Priority: **29.11.88 JP 299628/88**

(43) Date of publication of application: **06.06.90 Bulletin 90/23**

(84) Designated Contracting States: **CH DE FR GB LI NL**

(71) Applicant: **MITSUI TOATSU CHEMICALS, Inc.**
**2-5 Kasumigaseki 3-chome**
**Chiyoda-Ku Tokyo 100(JP)**

(72) Inventor: **Igata, Akitoshi**
**836-2, Oazakunugi**
**Omuta-shi Fukuoka-ken(JP)**
Inventor: **Takuma, Keisuke**
**300, Hirabarumachi**
**Omuta-shi Fukuoka-ken(JP)**
Inventor: **Mikoda, Tamio**
**455-5 Oazakunugi**
**Omuta-shi Fukuoka-ken(JP)**
Inventor: **Nagayoshi, Tatsuya**
**2-308, Kamishirakawamachi**
**Omuta-shi Fukuoka-ken(JP)**

(74) Representative: **Stuart, Ian Alexander et al**
**MEWBURN ELLIS 2 Cursitor Street**
**London EC4A 1BQ(GB)**

(54) **Anthraquinone compound, polymerizable dyestuff monomer derived therefrom and resin and color toner composition.**

(57) The present invention disclosed herein is directed to an anthraquinone compound represented by the formula (I) exhibiting a sharp yellow hue, a polymerizable dyestuff monomer having the anthraquinone compound in its skeleton and a coloring resin thereof, and a color toner composition containing the anthraquinone compound represented by the formula (I) as a dyestuff or in the form of a resin into which this compound is introduced.

EP 0 371 782 A2

Xerox Copy Centre

## Anthraquinone Compound, Polymerizable Dyestuff Monomer Derived therefrom and Resin, and Color Toner Composition

The present invention relates to a novel anthraquinone compound, a polymerizable dyestuff monomer derived therefrom and a resin, a coloring toner for use in electrophotography, and a color toner composition which is used as a yellow component for full color copy.

Various toner compositions containing coloring materials used in electrophotography have been suggested, and some of them are already put into practice. In general, each of these toner compositions contains a resin, the coloring material and carrier particles. As the coloring materials, cyan, magenta, yellow and black dyes or pigments are selectively used.

These color toners are required to have the following various physical and chemical properties:

(1) Frictional electricity properties of the color toners should not be inversely affected by temperature change.

(2) Conventionally, when continuously used and repeatedly developed, color toner particles collide with carrier particles, and these particles and a photosensitive plate deteriorates mutually. In consequence, the change in color density takes place or the density of a background heightens, which makes the quality of duplicates poor. Such a conventional drawback should be avoided.

(3) Conventionally, when it is tried to increase the amount of the color toner on the surface of a photosensitive plate having a latent image with the invention of heightening the density of a copy image, the background density usually rises, with the result that the so-called fog phenomenon occurs. Such a conventional problem should be solved.

(4) Since many colors are superposed upon one another, it is necessary that the color toners maintain good transparency.

(5) The respective color toners are required to be excellent in miscibility among their melts.

(6) For the faithful reproduction of an original, it is necessary that spectral reflection properties are good.

In contrast to the pigment, the dye can be solved in a molecular state in the toner resin. Thus, it is unnecessary that the resin and the dyestuff are ground separately and they are then mixed, and therefore the dye has the advantage that its color value is great. However, the dye tends to cohere under the influence of heat, pressure or moisture. Under such conditions, the color value of the dye consequently lowers. In addition, when printing is made using such a dye, the so-called fog phenomenon occurs owing to the spread of the dye, with the result than an image shades off unpreferably.

As means for overcoming these drawbacks, some techniques have been reported in which the dye molecule is fixed in the toner resin molecules by a convalent bond. These reported techniques can be roughly classified into the following two categories:

(i) Techniques in one category where the dye molecule having a reactive functional groups are bound to a usual polymeric monomer by the covalent bond so as to introduce the dye into the main chain of the monomer (e.g., Japanese Patent Laid-open Publication Nos. 6587/1972 and 245268/1987 and Japanese Patent Publication Nos. 3378/1972 and 25667/1973). Typical examples of these techniques can be shown by the following diagrams:

$$Cl\overset{O}{\overset{\|}{C}}\text{-R-}\overset{O}{\overset{\|}{C}}Cl + HO\text{-}\underline{Dyestuff}\text{-}OH \rightarrow \text{-}(O\overset{O}{\overset{\|}{C}}\text{-R-}\overset{O}{\overset{\|}{C}}\text{-O-}\underline{Dyestuff}\text{-}O)_n\text{-}$$

$$OCN\text{-R-}NCO + HO\text{-}\underline{Dyestuff}\text{-}OH \rightarrow \text{-}(\overset{O}{\overset{\|}{C}}NH\text{-R-}NH\overset{O}{\overset{\|}{C}}\text{-O-}\underline{Dyestuff}\text{-}O)_n\text{-}$$

$$OCN\text{-R-}NCO + H_2N\text{-}\underline{Dyestuff}\text{-}NH_2 \rightarrow \text{-}(\overset{O}{\overset{\|}{C}}NH\text{-R-}NH\overset{O}{\overset{\|}{C}}NH\text{-}\underline{Dyestuff}\text{-}NH)_n\text{-}$$

(ii) Techniques in another category where the dye is introduced in a pendant form into the main chain of the polymer (e.g., Japanese Patent Publication No. 11399/1972 and Japanese Patent Laid-open Publication No. 86058/1987). Typical examples of these techniques can be shown by the following diagrams:

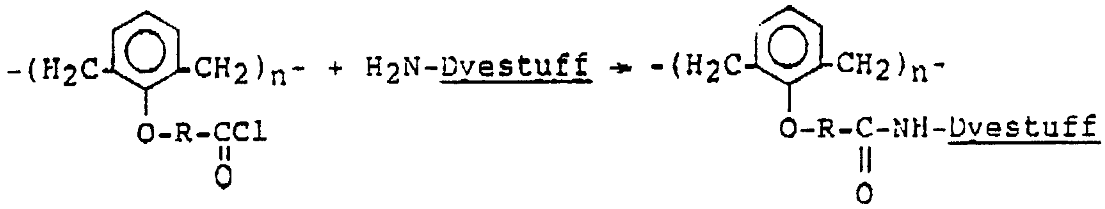

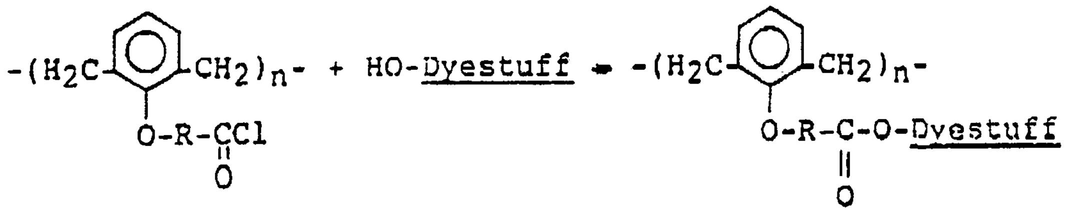

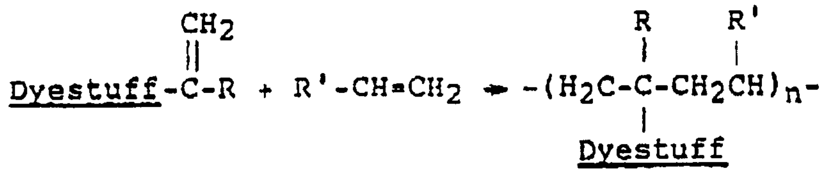

Some yellow compounds to be used for dyestuffs in these resins have been suggested. However, the hue of these compounds is too reddish, and their solubility is also poor when they are introduced into the resins, so that the reaction does not proceed completely and a sufficient color density is not obtained. Accordingly, the improved yellow compounds are desired.

An object of the present invention is to provide a novel compound exhibiting a sharp yellow hue.

Another object of the present invention is to provide a polymerizable dyestuff monomer having the above-mentioned novel compound in its skeleton, or a resin in which a dyestuff is bound.

Still another object of the present invention is to provide a color toner composition containing the above-mentioned novel compound as a dyestuff or in the form of a resin into which the same is introduced by covalent bond.

Inventors of the present application have intensively researched to develop a dyestuff which exhibits a sharp yellow hue, does not cohere even when dispersed in a resin, and has reactive functional groups. As a result, we have found that an anthraquinone compound represented by the formula (I)

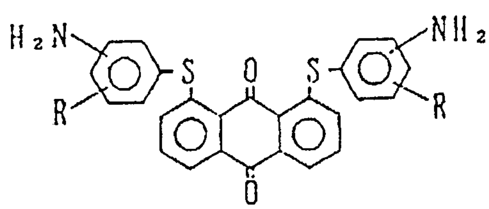

( I )

wherein R is a hydrogen atom, halogen atom, alkyl group, cycloalkyl group or alkoxyl group, may assume good characteristics, and the present invention has been achieved on the basis of this knowledge.

It is to be noted that the anthraquinone compound of the present invention has not been announced in any literature and is a novel compound.

A preferred compound of the present invention exhibits a sharp yellow color, exerts a high transparency when introduced into a resin, and provides a yellow color toner composition from which a fog-free keen image is obtained. Additionally, in a preferred compound of the present invention, light fastness is very high, and thus it is fair to say that the anthraquinone compound is very valuable in practice.

A compound represented by the formula (I) can be easily synthesized by reacting 1,8-dichloroanthraquinone with an aminothiophenol in the presence of a base such as potassium hydroxide or potassium carbonate in a polar solvent such as dimethylformamide, 1,3-dimethylimidazolidine or sulfolane at a

temperature of 60 to 150°C, preferably 80 to 120°C for a period of 1 to 8 hours under nitrogen atmosphere.

The aminothiophenol should be used in a molar ratio of 2 to 5, preferably 2 to 3 with respect to 1,8-dichloroanthraquinone. This aminothiophenol can be easily obtained by the following reaction:

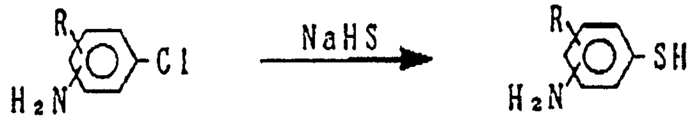


That is, it can be obtained by reacting an aniline derivative with sodium hydrogensulfide in a polar solvent such as ethanol at a temperature of 60 to 120°C.

Typical examples of R in the formula (I) include a hydrogen atom; halogen atoms such as a chlorine atom and bromine atom; alkyl groups having 1 to 22 carbon atoms such as a methyl group, ethyl group, isopropyl group, butyl group, isobutyl group, pentyl group, isopentyl group, hexyl group, heptyl group, octyl group, nonyl group, decyl group, tetradecyl group and octadecyl group, preferably alkyl groups having 1 to 12 carbon atoms; cycloalkyl groups having 3 to 12 carbon atoms such as a cyclopropyl group, cyclobutyl group, cyclopentyl group, cyclohexyl group and cycloheptyl group, preferably cycloalkyl groups having 4 to 8 carbon atoms; and alkoxyl groups having 1 to 22 carbon atoms such as a methoxy group, ethoxy group, butoxy group, octyloxy group, decyloxy group, dodecyloxy group, octadecyloxy group and cyclohexyloxy group, preferably alkoxyl groups having 1 to 12 carbon atoms.

Here, typical examples of the anthraquinone compound regarding the present invention are as follows, but they are not restrictive:
1,8-bis(2-aminophenylthio)anthraquinone, 1,8-bis(2-amino-4-chlorophenylthio)anthraquinone, 1,8-bis(2-amino-4-bromophenylthio)anthraquinone, 1,8-bis(2-amino-4-methylphenylthio)anthraquinone, 1,8-bis(2-amino-4-ethylphenylthio)anthraquinone, 1,8-bis(2-amino-4-propylphenylthio)anthraquinone, 1,8-bis(2-amino-4-isopropylphenylthio)anthraquinone, 1,8-bis(2-amino-4-butylphenylthio)anthraquinone, 1,8-bis(2-amino-4-isobutylphenylthio)anthraquinone, 1,8-bis(2-amino-4-pentylphenylthio)anthraquinone, 1,8-bis(2-amino-4-isopentylphenylthio)anthraquinone, 1,8-bis(2-amino-4-hexylphenylthio)anthraquinone, 1,8-bis(2-amino-4-heptylphenylthio)anthraquinone, 1,8-bis(2-amino-4-octylphenylthio)anthraquinone, 1,8-bis(2-amino-4-nonylphenylthio)anthraquinone, 1,8-bis(2-amino-4-decylphenylthio)anthraquinone, 1,8-bis(2-amino-4-undecylphenylthio)anthraquinone, 1,8-bis(2-amino-4-dodecylphenylthio)anthraquinone, 1,8-bis(2-amino-4-tridecylphenylthio)anthraquinone, 1,8-bis(2-amino-4-tetradecylphenylthio)anthraquinone, 1,8-bis(2-amino-4-pentadecylphenylthio)anthraquinone, 1,8-bis(2-amino-4-hexadecylphenylthio)anthraquinone, 1,8-bis(2-amino-4-heptadecylphenylthio)anthraquinone, 1,8-bis(2-amino-4-octadecylphenylthio)anthraquinone, 1,8-bis(2-amino-4-nonadecylphenylthio)anthraquinone, 1,8-bis(2-amino-4-eicosylphenylthio)anthraquinone, 1,8-bis(2-amino-4-heneicosylphenylthio)anthraquinone, 1,8-bis(2-amino-4-docosylphenylthio)anthraquinone, 1,8-bis(2-amino-4-cyclopropylphenylthio)anthraquinone, 1,8-bis(2-amino-4-cyclobutylphenylthio)anthraquinone, 1,8-bis(2-amino-4-cyclopentylphenylthio)anthraquinone, 1,8-bis(2-amino-4-cyclohexylphenylthio)anthraquinone, 1,8-bis(2-amino-4-cycloheptylphenylthio)anthraquinone, 1,8-bis(2-amino-4-methoxyphenylthio)anthraquinone, 1,8-bis(2-amino-4-ethoxyphenylthio)anthraquinone, 1,8-bis(2-amino-4-propoxyphenylthio)anthraquinone, 1,8-bis(2-amino-4-butoxyphenylthio)anthraquinone, 1,8-bis(2-amino-4-pentyloxyphenylthio)anthraquinone, 1,8-bis(2-amino-4-hexyloxyphenylthio)anthraquinone, 1,8-bis(2-amino-4-heptyloxyphenylthio)anthraquinone, 1,8-bis(2-amino-4-octyloxyphenylthio)anthraquinone, 1,8-bis(2-amino-4-nonyloxyphenylthio)anthraquinone, 1,8-bis(2-amino-4-decyloxyphenylthio)anthraquinone, 1,8-bis(2-amino-4-undecyloxyphenylthio)anthraquinone. 1,8-bis(2-amino-4-dodecyloxyphenylthio)anthraquinone, 1,8-bis(2-amino-4-tridecyloxyphenylthio)-anthraquinone, 1,8-bis(2-amino-4-tetradecyloxyphenylthio)anthraquinone, 1,8-bis(2-amino-4-pentadecyloxyphenylthio)anthraquinone, 1,8-bis(2-amino-4-hexadecyloxyphenylthio)anthraquinone, 1,8-bis(2-amino-4-heptadecyloxyphenylthio)anthraquinone, 1,8-bis(2-amino-4-octadecyloxyphenylthio)anthraquinone, 1,8-bis(2-amino-4-nonadecyloxyphenylthio)anthraquinone, 1,8-bis(2-amino-4-eicosyloxyphenylthio)anthraquinone, 1,8-bis(2-amino-4-heneicosyloxyphenylthio)anthraquinone and 1,8-bis(2-amino-4-docosyloxyphenylthio)-anthraquinone.

In each example of these anthraquinone compounds, an amino group is bound at 2-position of the phenyl group, but it may be substituted at another position. In this case, the substituent represented by R is also bound at another position.

The anthraquinone compound of the formula (I) regarding the present invention can be mixed simply with a resin, so that it becomes a coloring material.

That is, 0.1 to 10 parts by weight of the compound having the formula (I) is melted and mixed with the resin, thereby obtaining the coloring material.

Now, the coloring material of the present invention will be described.

As the resins which can be applied to the coloring material of the present invention, all of usual to be used for the toner can be employed. Examples of the usable resins include homopolymers of styrene and substituted styrenes such as polystyrene, poly(p-chlorostyrene) and poly(vinyltoluene); styrene copolymers such as styrene-vinylnaphthalene copolymer, styrene-methyl acrylate copolymer, styrene-ethyl acrylate copolymer, styrene-butyl acrylate copolymer, styrene-octyl acrylate copolymer, sytrene-methyl methacrylate copolymer, styrene-ethyl methacrylate copolymer, styrene-butyl methacrylate copolymer, styrene-methyl α-chloromethacrylate copolymer, styrene-acrylonitrile copolymer, styrene-vinylmethyl ether copolymer, styrene-vinylethyl ether copolymer, styrene-vinylmethyl ketone copolymer, styrene-butadiene copolymer, styrene-isoprene copolymer, styrene-acrylonitrile-indene copolymer, styrene-maleic acid copolymer and styrene-maleate copolymer; polymethyl methacrylate, polybutyl methacrylate, polyvinyl chloride, polyvinyl acetate, polyethylene, polypropylene, polyester, polyurethane, polyamide, polyvinyl butyral, polyacrylic acid resin, rosin, modified rosins, terpene resin, phenolic resins, aliphatic and alicyclic hydrocarbon resins, aromatic petroleum resins, chlorinated paraffins and paraffin wax. These resins can be used singly or in combination.

Next, reference will be made to constitutional components of a color toner composition in which the coloring material of the present invention is mixed with an electric charge control agent and carrier particles.

The material which is particularly important as one of the constitutional components of the color toner composition is the coloring material in which the anthraquinone compound represented by the formula (I) is mixed with the resin.

The amount of the anthraquinone compound represented by the formula (I) depends upon electric charge properties of the resin, a kind of supplementally added colorant, electric charge properties of additives, compatibility with the resin, the produce of dispersion and the like. Therefore, the amount cannot be uniformly decided, but generally speaking, the anthraquinone compound is suitably used in the range of about 0.1 to 10% by weight, preferably 0.5 to 5% by weight based on the weight of the above-mentioned resin.

One of the important performances of the toner is electrification properties, and for the acquisition of this performance, an electic charge control agent is used. Typical examples of the electic charge control agent include N-alkylpyridinium compounds such as N-cetylpyridinium chloride; quaternary ammoniums such as octadecylammonium chloride; and metal complexes such as bis(4-t-butylsalicylic acid) chromium (II). The electic charge control agent used in an amount of 0.5 to 5% by weight, preferably 1 to 2% by weight, based on the weight of the resin.

Furthermore, typical examples of the carrier particles, which can be mixed with the resin for the color toner in order to form the color toner, include particle zircon, particle silicon, polymethyl methacrylate, glass, steel, nickel, iron ferrite and silicon dioxide. They are used usually in a particle diameter of about 50 to 1,000 microns. The carrier particles can be mixed with the color toner particles in an optional desirable ratio, but in general, the carrier particles are used in ratio of 10 to 200 parts by weight based on about 1 part by weight of the toner.

Next, reference will be made to the procedure of introducing the compound of the formula (I) into the resin by a covalent bond.

When the compound of the formula (I) is reacted with a vinyl monomer such as an acid halide compound having a vinyl group, an isocyanate compound having a vinyl group or an epoxy compound having a vinyl group, a polymerizable dyestuff monomer can be obtained. In this case, examples of the vinyl monomer which will react with the compound of the formula (I) include methacrylic acid chloride, methacryloylethyl isocyanate or glycidyl methacrylate. Such a vinyl monomer and the compound of the formula (I) are heated with stirring in the presence of a base such as pyridine in an organic solvent such as dioxane or 1,3-dimethyl-2-imidazolidinone (DMI) at a temperature of 40 to 150 °C, preferably 50 to 80 °C for a period of 1 to 5 hours, thereby obtaining the desired polymerizable dyestuff monomer.

Examples of the thus obtained polymerizable dyestuff monomer are as follows:

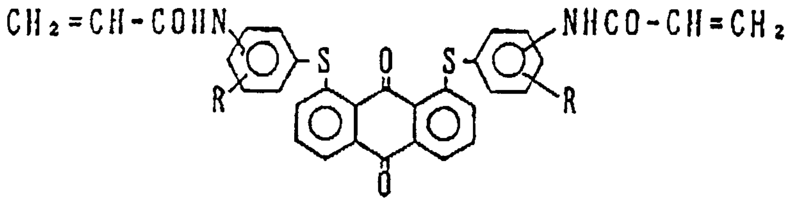

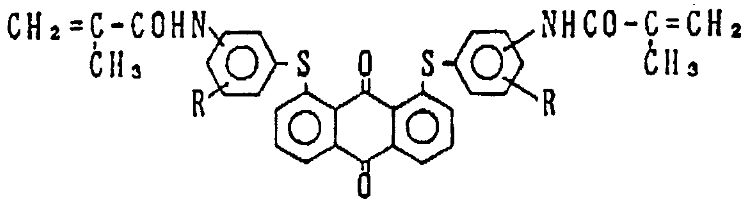

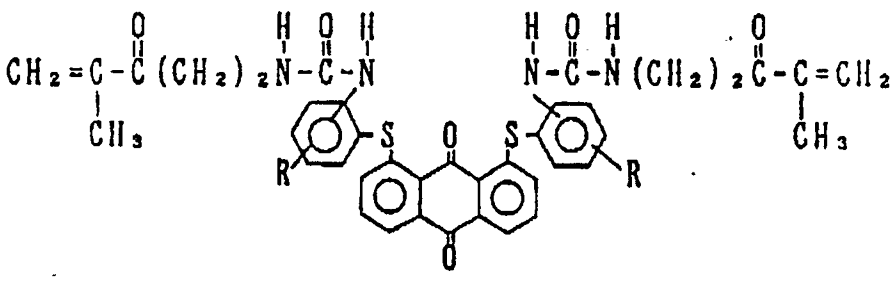

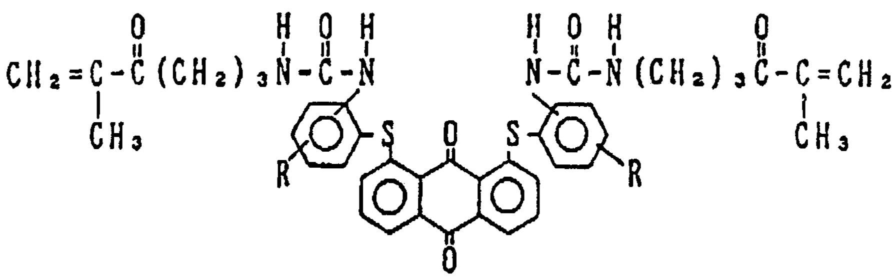

When the polymerizable dyestuff monomer is copolymerized with a polymerizable monomer having a vinyl group such as an alkyl methacrylate or styrene in the presence of polyacrylic acid, a coloring resin can be obtained.

The thus obtained resin has, for example, the following structure:

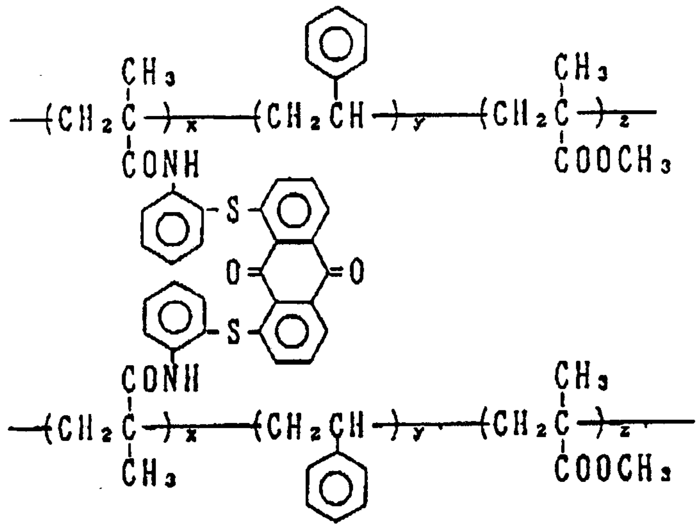

wherein each of X, Y, Y′, Z and Z′ is a molar fraction, and X is a value of 0.001 to 0.1, preferably 0.01 to 0.05.

Furthermore, other kinds of coloring resins can be also obtained. Procedures for the preparation of these kinds will be described.

In the first place, the coloring resin can be prepared by copolymerizing the anthraquinone of the formula (I) with a reactive monomer.

Examples of such a reactive monomer include diisocyanate compounds such as 1,2-ethylene diisocyanate, toluene-2,4-diisocyanate, diphenylmethane-4,4′-diisocyanate and biphenylene-4,4′-diisocyanate; bishaloformate compounds such as ethylene glycol bischloroformate and propylene glycol chloroformate; and diacid halide compounds such as phthalic acid chloride, isophthalic acid chloride, terephthalic acid chloride, glutaric acid chloride, oxalic acid chloride and adipoyl chloride.

That is, such a reactive monomer is heated with stirring together with the anthraquinone compound of the formula (I) and a colorless difunctional compound such as bisphenol A in the presence of a base such as pyridine in an organic solvent such as dioxane or 1,3-dimethyl-2-imidazolidinone (DMI) at a temperature of 0 to 160 °C, preferably 10 to 90 °C for a period of 1 to 8 hours to obtain the coloring resin.

Moreover, the coloring resin can be also formed by reacting the compound of the formula (I) with a polymer having an acid halide group.

Here, examples of the polymer having an acid halide group are the following polymerized acid halides:

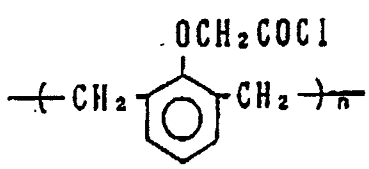

and

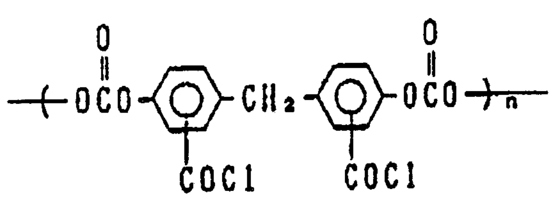

That is, such a polymric acid halide is heated with stirring together with the anthraquinone compound of the formula (I) and a colorless difunctional compound such as bisphenol A in the presence of a base such as pyridine in an organic solvent such as dioxane or 1,3-dimethyl-2-imidazolidinone (DMI) at a temperature of 40 to 180 °C, preferably 60 to 120 °C for a period of 1 to 10 hours in order to obtain the coloring resin.

In the coloring resin, the content of the anthraquinone compound of the formula (I) is preferably from about 0.1 to 10% by weight. When the above-mentioned electric charge control agent and carrier particles are added to this coloring resin, a color toner composition can be obtained.

Now, the present invention will be described in detail in reference to examples, but the latter intend to exemplify the invention and do not intend to limit the scope of the invention. In the examples, the unit "parts" denotes "parts by weight", unless otherwise noted. Furthermore, the light-fastness of duplicates was measured by the use of a fadeometer, and evaluation was made in accordance with JIS L 0842-88.

Example 1

A suspension comprising 400 parts of sulfolane, 116 parts of 2-aminothiophenol and 72.5 parts of potassium carbonate was heated up to 60°C and then stirred for 30 minutes. Afterward, 97 parts of 1,8-dichloroanthraquinone was added thereto and then stirred at 90 to 95°C for 3 hours. The resulting reaction solution was added to 2,000 parts of methanol, followed by stirring, fitrating, washing with methanol and then water, and drying to obtain 156 parts (yield 98%) of 1,8-bis(2-aminophenylthio)anthraquinone represented by the formula:

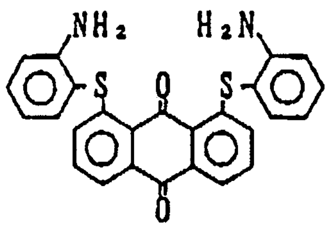

Melting point: about 250°C
Electronic spectrum (in toluene):
adsorption maximum 435 nm
$^1H$ NMR spectrum: (DMSO-$D_6$, TMS)
5.2 ppm (4H, s, amino proton)
6.6-8.0 ppm (14H, m,aromatic ring proton)
IR spectrum (KBr):
464,499,549,626, 653,676,736,752,799,840,915,977,1024, 1088,1140,1159,1180,1248,1309,1338, 1420,1446,1479,1559,1573,1610,1635, 1664,3017,3063,3370,3451 $cm^{-1}$

| Elemental analysis (as $C_{26}H_{18}O_2S_2N_2$) | | | | |
|---|---|---|---|---|
| | C | H | N | S |
| Found (%) | 68.52 | 4.01 | 6.05 | 14.20 |
| Calcd. (%) | 68.70 | 3.99 | 6.16 | 14.11 |

The analytical data were in accord with the above-mentioned structure.

Examples 2 to 10

The same procedure as in Example 1 was repeated with the exception that 2-aminothiophenol was replaced with each aminothiophenol derivative shown in Table 1, to obtain an anthraquinone compound. The results are set forth in Table 1.

Table 1 (I)

| Example | Material | | Yield (%) | Product | |
|---|---|---|---|---|---|
| | Anthraquinone | Aminothiophenol | | Position of amino group (on phenyl group) | R (on phenyl group) |
| 2 | 1,8-dichloro-anthraquinone | 4-aminothio-phenol | 99 | 4-position | hydrogen |
| 3 | " | 2-amino-4-chlorothio-phenol | 96 | 2-position | 4-chloro |
| 4 | " | 2-amino-4-octylthio-phenol | 93 | 2-position | 4-octyl |
| 5 | " | 4-amino-3-methylthio-phenol | 98 | 4-position | 3-methyl |
| 6 | " | 4-amino-2-cyclohexylthio-phenol | 95 | 4-position | 2-cyclohexyl |

Table 1 (II)

| Example | Material | | Yield | Product | |
|---|---|---|---|---|---|
| | Anthraquinone | Aminothiophenol | (%) | Position of amino group (on phenyl group) | R (on phenyl group) |
| 7 | 1,8-dichloro-anthraquinone | 2-amino-5-methoxythio-phenol | 97 | 2-position | 5-methoxy |
| 8 | " | 4-amino-3-isobutylthio-phenol | 98 | 4-position | 3-isobutyl |
| 9 | " | 2-amino-5-dodecylthio-phenol | 94 | 2-position | 5-dodecyl |
| 10 | " | 2-amino-4-octyloxy-thiophenol | 89 | 2-position | 4-octyloxy |

Table 1 (III)

| Example | Melting Point (°C) | Electronic Spectrum Absorption Maximum (nm) | Molecular Formula | Elemental Analysis (calcd.) (found) C | H | N | S |
|---|---|---|---|---|---|---|---|
| 2 | >250 | 437 | $C_{26}H_{18}O_2S_2N_2$ | 68.70<br>68.46 | 3.99<br>3.92 | 6.16<br>5.98 | 14.11<br>13.92 |
| 3 | >250 | 434 | $C_{26}H_{16}O_2S_2N_2Cl_2$ | 59.66<br>59.52 | 3.08<br>3.12 | 5.35<br>5.16 | 12.25<br>12.01 |
| 4 | 232 | 436 | $C_{42}H_{50}O_2S_2N_2$ | 74.29<br>74.31 | 7.42<br>7.31 | 4.13<br>4.06 | 9.45<br>9.46 |
| 5 | >250 | 436 | $C_{28}H_{22}O_2S_2N_2$ | 69.68<br>69.71 | 4.59<br>4.66 | 5.80<br>5.65 | 13.29<br>13.02 |
| 6 | >250 | 435 | $C_{38}H_{38}O_2S_2N_2$ | 73.74<br>73.82 | 6.19<br>6.03 | 4.53<br>4.29 | 10.36<br>10.26 |

Table 1 (IV)

| Example | Melting Point (°C) | Electronic Spectrum Absorption Maximum (nm) | Molecular Formula | Elemental Analysis (calcd.) (found) | C | H | N | S |
|---|---|---|---|---|---|---|---|---|
| 7 | >250 | 438 | $C_{28}H_{22}O_4S_2N_2$ | | 65.35<br>65.36 | 4.31<br>4.29 | 5.44<br>5.25 | 12.46<br>12.52 |
| 8 | 248 | 436 | $C_{34}H_{34}O_2S_2N_2$ | | 72.05<br>71.93 | 6.05<br>6.21 | 4.94<br>4.69 | 11.32<br>11.21 |
| 9 | 219 | 436 | $C_{50}H_{66}O_2S_2N_2$ | | 75.90<br>75.77 | 8.41<br>8.52 | 3.54<br>3.36 | 8.10<br>8.04 |
| 10 | 241 | 437 | $C_{42}H_{50}O_4S_2N_2$ | | 74.29<br>74.06 | 7.42<br>7.62 | 4.13<br>4.22 | 9.45<br>9.18 |

Example 11

In a mixture of 400 parts of 1,4-dioxane and 40 parts of pyridine were dissolved 4.6 parts of 1,8-bis(2-aminophenylthio)anthraquinone obtained in Example 1 and 32 parts of 2,2-bis(p-hydroxyphenyl)propane (common name bisphenol A) at 5 to 10° C, and 4.7 parts of diethylene glycol bischloro formate was further added thereto with stirring at 10 to 15° C over 30 minutes. Reaction was then performed at this temperature for 2 hours, and afterward the reaction solution was slowly added to 5,000 parts of hexane with vigorous stirring. The resulting precipitate was then filtered, washed with water, and dried, thereby obtaining 38 parts of yellow polycarbonate.

The thus obtained resin was ground to particles of 10 to 12 µm by means of a jet mill, and 40 parts of the resin particles and 1 part of tetraoctylammonium chloride were then mixed with 100 parts of iron grains having an average grain size of 100 to 150 mesh to prepare a color toner composition.

By the use of this color toner composition, duplication was then carried out through a dry paper electrostatic photography duplicator (trade name NP-5000; made by Canon Inc.), so that a sharp yellow image could be obtained. Furthermore, light-fastness of the duplicate was good, the seventh grade.

Example 12

To a mixture of 100 parts of 40% formalin and 90 parts of phenoxyacetic acid was added 10 parts of concentrated hydrochloric acid, and this solution was then heated with stirring at 103 to 108° C for 4 hours. Immediately after the stirring, 500 parts of warm water at 50° C was further added thereto, and water was then removed therefrom by decantation. Afterward, 500 parts of water was added thereto again at room temperature, followed by filtering and washing with water. The resulting product was then heated slowly with stirring under a reduced pressure of 30 mmHg, and reaction was performed at 110 to 115° C for 5 hours in order to obtain 101 parts of a polyphenetylene resin having the following formula:

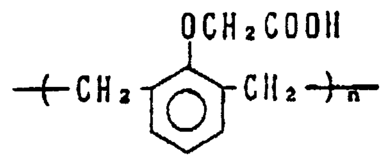

In 500 parts of toluene was dispersed 178 parts of the thus obtained resin, and 180 parts of thionyl chloride was then added thereto at ordinary temperature and reaction was performed at 40° C for 4 hours. Afterward, excess thionyl chloride was distilled off under reduced pressure, and a solution in which 12 parts of 1,8-bis(4-amino-2-methylphenylthio)anthraquinone represented by the formula

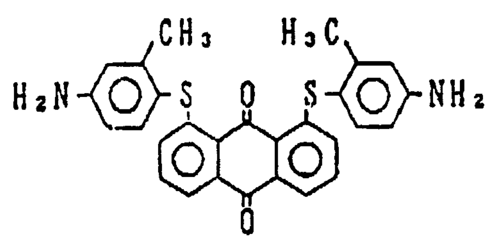

was dissolved in 100 parts of dioxane was added dropwise to the reaction solution, while 50 parts of pyridine was simultaneously added dropwise thereto. Afterward, the solution was heated with stirring at 100° C for 2 hours.

After completion of the reaction, 200 parts of water was added to the solution, and stirring was carried out for 5 hours, followed by filtering, washing with water and drying, in order to obtain 98 parts of a yellow powder.

The thus obtained resin powder having a particle diameter of 10 to 14 µm was then mixed with an

electric charge control agent (tetraoctylammonium chloride) and a carrier (iron powder) by the same procedure as in Example 11, thereby obtaining a yellow toner composition. By the use of this color toner composition, duplication was then carried out as in Example 11, so that a sharp yellow image could be obtained. Furthermore, light-fastness of the duplicate was good, the seventh grade.

Example 13

In 70 parts of 1,3-dimethyl-2-imidazolidinone (DMI) were dissolved 2.3 parts of 1,8-bis(2-amino-4-methoxyphenyl thio)anthraquinone represented by the formula

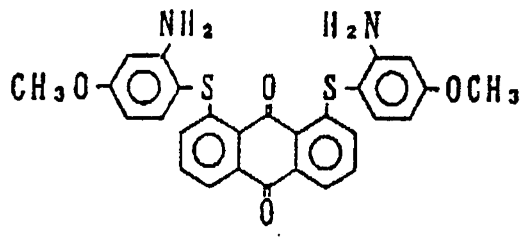

and 20 parts of bisphenol A, and 0.9 part of hexamethylene diisocyanate was further added dropwise thereto at 50°C over 1 hour under a nitrogen atmosphere, followed by stirring at 100°C for 4 hours. After cooling, 500 parts of ethanol was added to the cooled solution with stirring, and it was then filtered, washed with ethanol twice and then with water, and dried, thereby obtaining 22 parts of a resin powder.

The thus obtained resin powder having a particle diameter of 8 to 12 µm was then mixed with an electric charge control agent (N-cetyl pyridinium chloride) and a carrier (iron powder) by the same procedure as in example 11, thereby obtaining a yellow toner composition. By the use of this color toner composition, duplication was then carried out as in example 11, so that a sharp yellow image could be obtained. Furthermore, light-fastness of the duplicate was good, the seventh grade.

Example 14

In 200 parts of dioxane was dissolved 44.5 parts of 1,8-bis(2-aminophenylthio)anthraquinone obtained in Example 1, and 8 parts of pyridine was added thereto. Afterward, 10.6 parts of methacrylic acid chloride was added thereto dropwise over 20 minutes. The solution was then stirred at a temperature of 60°C for 3 hours and cooled to room temperature, and the solvent was removed by vacuum distillation. The resulting yellow solid was put into 100 parts of methanol, and then stirred for 1 hour, followed by filtering, washing with water and drying to obtain 51 parts of a dyestuff monomer represented by the formula:

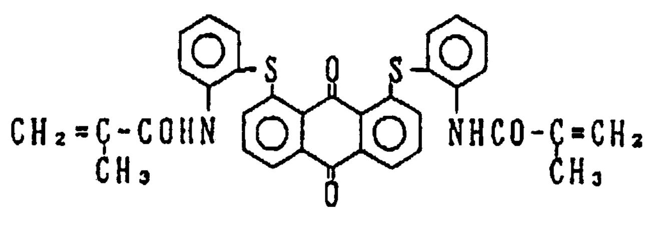

Melting point: about 250°C

| Elemental analysis (as $C_{34}H_{26}O_4S_2N_2$) | | | | |
|---|---|---|---|---|
| | C | H | N | S |
| Found (%) | 69.09 | 4.51 | 4.68 | 10.59 |
| Calcd. (%) | 69.13 | 4.44 | 4.74 | 10.86 |

Electronic spectrum (in toluene):
absorption maximum 424 nm

Examples 15 to 23

Following the same procedure as in Example 14, polymerizable dyestuff monomers represented by the following formula (II) were synthesized from materials shown in Table 2. The obtained polymerizable dyestuff monomers are also set forth in Table 2, in which $R^1$ and $R^2$ of the products denote groups in the following structural formula:

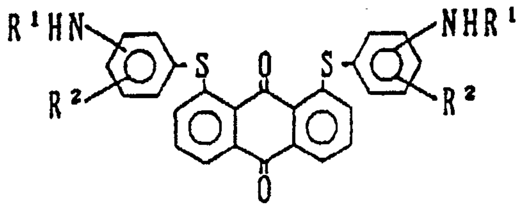

( II )

Table 2 (I)

| Example | Material<br>Dyestuff | <br>Reactive Momoner | Yield |
|---|---|---|---|
| 15 | compound in Example 2 | methacrylic acid chloride | 97 |
| 16 | compound in Example 3 | methacryloylethyl isocyanate | 96 |
| 17 | compound in Example 4 | methacryloylethyl isocyanate | 97 |
| 18 | compound in Example 5 | methacryloylpropyl isocyanate | 97 |
| 19 | compound in Example 6 | methacryloylpropyl isocyanate | 96 |
| 20 | compound in Example 7 | methacrylic acid chloride | 97 |
| 21 | compound in Example 8 | glycidyl methacrylate | 98 |
| 22 | compound in Example 9 | glycidyl methacrylate | 95 |
| 23 | compound in Example 10 | methacrylic acid chloride | 99 |

Table 2 (II)

| Example | Product | | | Melting Point (°C) | Electronic Spectrum Absorption Maximum (nm) (in toluene) |
|---|---|---|---|---|---|
| | Position of $NHR^1$ Group (on phenyl group) | $R^1$ | $R^2$ (on phenyl group) | | |
| 15 | 4-position | methacryloyl | hydrogen | >250 | 423 |
| 16 | 2-position | methacryloyl-ethylamino-carbonyl | 4-chloro | 229 | 422 |
| 17 | 2-position | methacryloyl-ethylamino-carbonyl | 4-octyl | 198 | 425 |
| 18 | 4-position | methacryloyl-propylamino-carbonyl | 3-methyl | 242 | 423 |
| 19 | 4-position | methacryloyl-propylamino-carbonyl | 2-cyclo-hexyl | 236 | 424 |

**Table 2 (III)**

| Example | Product | | | Melting Point (°C) | Electronic Spectrum Absorption Maximum (nm) (in toluene) |
|---|---|---|---|---|---|
| | Position of $NHR^1$ Group (on phenyl group) | $R^1$ | $R^2$ (on phenyl group) | | |
| 20 | 2-position | methacryloyl | 5-methoxy | 249 | 421 |
| 21 | 4-position | 3-methacryl-olyloxy-2-hydroxypropyl | 3-isobutyl | 216 | 431 |
| 22 | 2-position | 3-methacryl-oyloxy-2-hydroxypropyl | 5-dodecyl | 188 | 432 |
| 23 | 2-position | methacryloyl- | 4-octyloxy | 199 | 427 |

Example 24

In a mixture of 2,000 parts of ethanol and 180 parts of water was dissolved 30 parts of polyacrylic acid, and 240 parts of styrene, 140 parts of methyl methacrylate, 15 parts of benzoyl peroxide and 5 parts of the dyestuff monomer obtained in Example 14 were added thereto. The resulting solution was then stirred for 25 hours, filtered, and washed with methanol and then water, thereby obtaining 400 parts of yellow resin.

The thus obtained resin was ground to particles of 10 to 14 µm by means of a jet mill, and 40 parts of the resin particles and 1 part of tetraoctylammonium chloride were then mixed with 100 parts of iron grains having an average grain size of 100 to 150 mesh to prepare a color toner composition.

By the use of this color toner composition, duplication was then carried out through a dry paper electrostatic photography duplicator (trade name NP-5000; made by Canon Inc.), so that a sharp yellow image could be obtained. Furthermore, light-fastness of the duplicate was good, the seventh grade.

Example 25

Five parts of 1,8-bis(2-aminophenylthio)anthraquinone obtained in Example 1 and 95 parts of a resin for toner [styrene-acrylate copolymer; trade name Haimer-TB-1000F (Sanyo Chemical Industries, Ltd.)] were mixed and ground by means of a ball mill. Afterward, the resulting mixture was heated up to 150 °C and then mixed under melting. After cooling, the mixture was coarsely ground by using a hammer mill, and the coarse grains were then finely ground by a mill in which an air jet system was utilized.

The fine particles were further graded so as to select the particles of 1 to 20 µm, which were a toner. Afterward, 90 parts of a carrier iron powder (trade name EFV 250/400; made by Nippon Teppun Co., Ltd.) was uniformly mixed with 10 parts of the above-mentioned toner to prepare a toner composition. By the use of this color toner composition, duplication was then carried out through a dry paper electrostatic photography duplicator (trade name NP-5000; made by Canon Inc.), so that a fog-free sharp yellow image could be obtained. Furthermore, light-fastness of the duplicate was good, the seventh grade.

**Claims**

1. An anthraquinone compound represented by the formula (I)

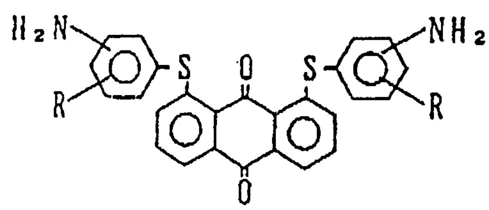

( I )

wherein R is a hydrogen atom, halogen atom, alkyl group, cycloalkyl group or alkoxyl group.

2. A polymerizable dyestuff monomer obtained by reacting an anthraquinone compound represented by the formula (I) with a vinyl group-containing monomer.

3. A polymerizable dyestuff monomer according to Claim 2 wherein said vinyl group-containing monomer is an acid halide compound having a vinyl group.

4. A polymerizable dyestuff monomer according to Claim 2 wherein said vinyl group-containing monomer is an isocyanate compound having a vinyl group.

5. A polymerizable dyestuff monomer according to Claim 2 wherein said vinyl group-containing monomer is an epoxy compound having a vinyl group.

6. A coloring resin obtained by reacting an anthraquinone compound represented by the formula (I) and a polymer having an acid halide group.

7. A coloring resin obtained by copolymerizing a polymerizable dyestuff monomer according to any of claims 2-5 and a monomer having a vinyl group.

8. A coloring resin obtained by copolymerizing an anthraquinone compound represented by the formula

(I), a difunctional compound and a diisocyanate compound.

9. A coloring resin obtained by copolymerizing an anthraquinone compound represented by the formula (I), a difunctional compound and a diacid halide compound.

10. A coloring resin obtained by copolymerizing an anthraquinone compound represented by the formula (I), a difunctional compound and a bishalo formate compound.

11. A color toner composition containing toner particles in which an anthraquinone compound represented by the formula (I) and a resin are dispersed and mixed.

12. A color toner composition containing a coloring resin according to any of claims 6-10.